# EUROPEAN PATENT APPLICATION

(11) **EP 2 942 266 A1**
(43) Date of publication of application: **11.11.2015**
(21) Application number: 15164870.6
(22) Date of filing: 23.04.2015
(51) Int. Cl.: B62K 19/18

(54) **BICYCLE FRAME**

(30) Priority: 06.05.2014 US 201414270769
(71) Applicant: Cycling Sports Group, Inc., CT 06851 (US)
(72) Inventor: Schmidt, Andrew, Danbury, CT Connecticut 06810 (US); Nawrozki, Damon, Dunedin, FL Florida 34698 (US)
(74) Representative: Siecker, Eric Johannes

(57) **Abstract**

A bicycle frame has a plurality of frame members that includes a first member and a second member, the first member having an outer sheath disposed at one end, wherein the outer sheath at least partially surrounds the second member with a gap therebetween such that the outer sheath does not directly touch the second member. An elastically deformable coupling is disposed in compression between the outer sheath and the second member, the elastically deformable coupling being disposed to at least partially fill the gap.

## Description

### BACKGROUND OF THE INVENTION

The present disclosure relates generally to bicycles, more particularly to a bicycle frame, and even more particularly to a bicycle frame equipped with a vibration damping system.

Bicycles, and particularly bicycle frames, have evolved from a rigid six bar member structure having a head tube, a top tube, a down tube, a seat tube, chain stays, and seat stays, all rigidly connected to each other to produce rigid triangular forms, to a more compliant system involving front fork shock absorbers, seat stay shock absorber systems, flexible seat stays, or flexible chain stays, all in an effort to reduce road vibration transmitted to the rider and/or improve riding comfort for the rider. Such arrangements may require a complex shock absorbing system, or may require finely tuned structural members that may not be suitable for a variety of riding terrains.

While existing bicycle frames may be suitable for their intended purpose, the art of bicycle frames can be advanced by providing a bicycle frame with a vibration damping coupling that enhances vibrational damping experienced by the rider with reduced complexity and over a variety of riding terrains.

This background information is provided to reveal information believed by the applicant to be of possible relevance to the present invention. No admission is necessarily intended, nor should be construed, that any of the preceding information constitutes prior art against the present invention.

### BRIEF DESCRIPTION OF THE INVENTION

In an embodiment of the invention, a bicycle frame has a plurality of frame members including a first member and a second member, the first member having an outer sheath disposed at one end, wherein the outer sheath at least partially surrounds the second member with a gap therebetween such that the outer sheath does not directly touch the second member. An elastically deformable coupling is disposed in compression between the outer sheath and the second member, the elastically deformable coupling being disposed to at least partially fill the gap.

In another embodiment, a bicycle includes a bicycle frame, a front wheel, a front fork, handlebars, a rear wheel, a seat post and seat, a crank, and a drive chain, all operably coupled to the bicycle frame. The bicycle frame has a plurality of frame members including a first member and a second member, the first member having an outer sheath disposed at one end, wherein the outer sheath at least partially surrounds the second member with a gap therebetween such that the outer sheath does not directly touch the second member. An elastically deformable coupling is disposed in compression between the outer sheath and the second member, the elastically deformable coupling being disposed to at least partially fill the gap.

The above features and advantages and other features and advantages of the invention are readily apparent from the following detailed description of the invention when taken in connection with the accompanying drawings.

### BRIEF DESCRIPTION OF THE DRAWINGS

Referring to the exemplary non-limiting drawings wherein like elements are numbered alike in the accompanying Figures:
Figure 1 depicts a bicycle having a vibration damping coupling in accordance with an embodiment of the invention;
Figure 2 depicts another bicycle having alternative vibration damping coupling in accordance with an embodiment of the invention;
Figure 3 depicts a bicycle frame in accordance with the embodiment depicted in Figure 1;
Figure 4 depicts an exploded assembly view of a portion of the bicycle frame of Figure 3, in accordance with an embodiment of the invention;
Figure 5 depicts a cross-section view of a bicycle frame portion of Figure 3 taken through cut-line 5-5, in accordance with an embodiment of the invention;
Figure 6 depicts a cross-section view of an alternative bicycle frame portion of Figure 3 taken through cut-line 6-6, in accordance with an embodiment of the invention;
Figure 7 depicts a cross-section view of the bicycle frame portion of Figure 6 taken through cut-line 7-7, in accordance with an embodiment of the invention;
Figure 8 depicts an alternative vibration damping coupling to that depicted in Figure 3;
Figure 9 depicts a portion of a bicycle frame in accordance with the embodiment depicted in Figure 2;
Figure 10 depicts a cross-section view of a portion of the bicycle frame of Figure 9, in accordance with an embodiment of the invention;
Figure 11 depicts a cross-section view of the portion of the bicycle frame of Figure 9 taken through cut-line 11-11, in accordance with an embodiment of the invention;
Figure 12 depicts a cross-section view of a portion of a bicycle frame alternative to that of Figure 10, in accordance with an embodiment of the invention;
Figure 13 depicts a vibration damping coupling alternative to that depicted in Figures 1 and 2, in accordance with an embodiment of the invention; and
Figure 14 depicts a manufacturing method for producing the vibration damping coupling depicted in Figure 13, in accordance with an embodiment of the invention.

### DETAILED DESCRIPTION OF THE INVENTION

Although the following detailed description contains many specifics for the purposes of illustration, anyone of ordinary skill in the art will appreciate that many variations and alterations to the following details are within the scope of the invention. Accordingly, the following preferred embodiments of the invention are set forth without any loss of generality to, and without imposing limitations upon, the claimed invention.

An embodiment of the invention, as shown and described by the various figures and accompanying text, provides a bicycle frame with a vibration damping coupling disposed between the seat stays and another structural frame member of the bicycle to reduce the transmission of vibration from the seat stays, or rear wheels, to the rider, or bicycle seat. While the embodiments described herein may depict a specific type of bicycle, such as a road bike for example, it will be appreciated that the disclosed invention is also applicable to other types of bicycles, such as mountain bikes, racing bikes, and touring bikes, for example but without limitation.

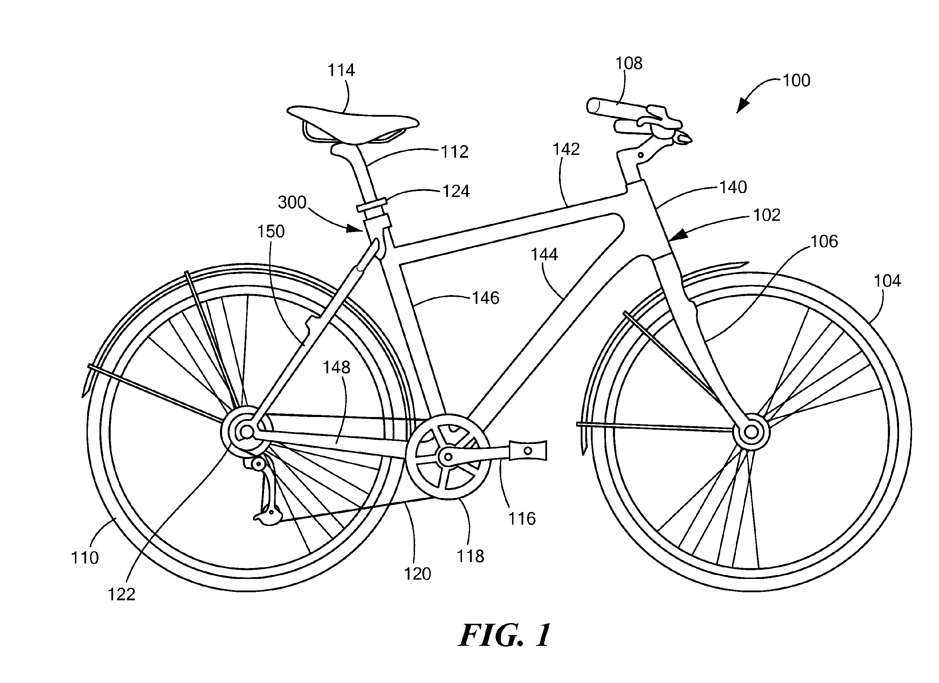

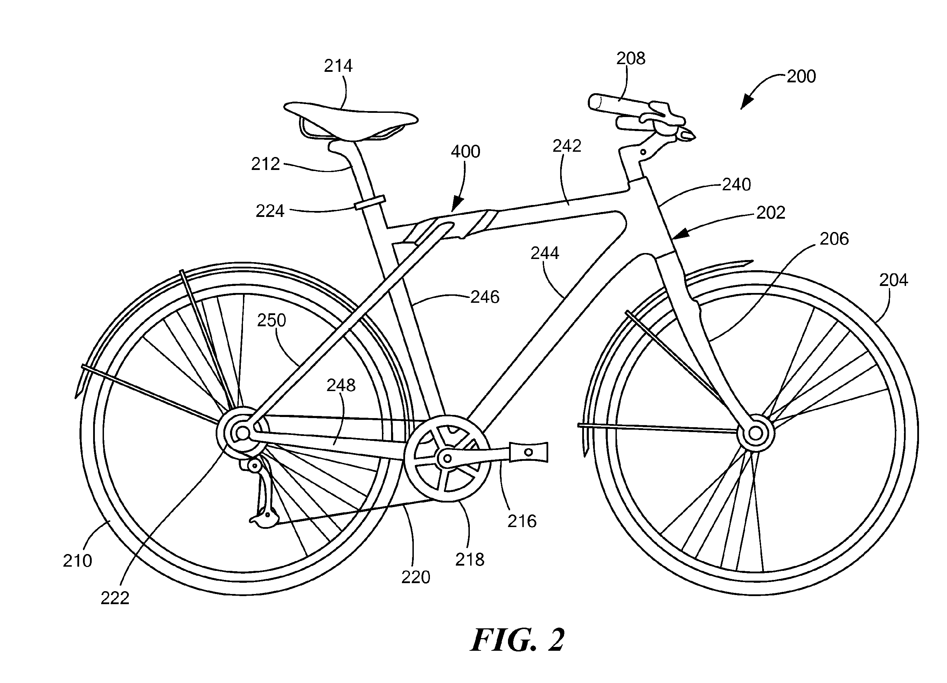

Figures 1 and 2 each depict an embodiment of a bicycle 100, 200, respectively, in accordance with an embodiment of the invention. Each bicycle 100, 200 has, respectively, a bicycle frame 102, 202, a front wheel 104, 204, a front fork 106, 206, handlebars 108, 208, a rear wheel 110, 210, a seat post 112, 212 and seat 114, 214, a crank 116, 216 and chainring 118, 218, a drive chain 120, 220, and a rear drive sprocket 122, 222, all operably coupled to the bicycle frame 102, 202. Operational cables, such as brake cables and gear cables, have been omitted from Figures 1 and 2 for clarity.

In an embodiment, each bicycle frame 102, 202 respectively includes a plurality of frame members that includes an effective head tube 140, 240, an effective top tube 142, 242, an effective down tube 144, 244, an effective seat tube 146, 246, chain stays 148, 248, and seat stays 150, 250. As used herein, the term "effective (head, top, down, seat) tube" refers to a particular structural member of the bicycle frame that may not necessarily be tubular, but has the functionality of a tubular member when used in place of the tubular member. While it is customary in the art of bicycles to refer to frame members, such as for example head tubes, seat tubes, down tubes and top tubes, as being tubes, it may be that such members are fabricated out of a lightweight material having a solid yet aerodynamic cross-section that is not tubular per se. Hence, the terms effective head tube, effective top tube, effective down tube, and effective seat tube, are intended to encompass both tubular and non-tubular structures having the intended functionality that their names convey.

Each seat post 112, 212 is adjustably clamped to its respective effective seat tube 146, 246 via a seat post clamp 124, 224. To facilitate clamping, each effective seat tube 146, 246 is typically equipped with a vertical slot formed in its side wall at its upper end proximate the clamping bolt 126, 226 and nut 128, 228, so that compression of the seat post clamp 124, 224 elastically compresses the upper end of the effective seat tube 146, 246 against the seat post 112, 212, thereby securely holding the seat post 112, 212 in place, in a manner known in the art.

The bicycle frame 102 of the embodiment depicted in Figure 1 includes a vibration damping coupling 300 that couples the seat stays 150 to the effective seat tube 146, and the bicycle frame 202 of the embodiment depicted in Figure 2 includes a vibration damping coupling 400, having features similar to those of vibration damping coupling 300, that couples the seat stays 250 to the effective top tube 242, which will be discussed in more detail below.

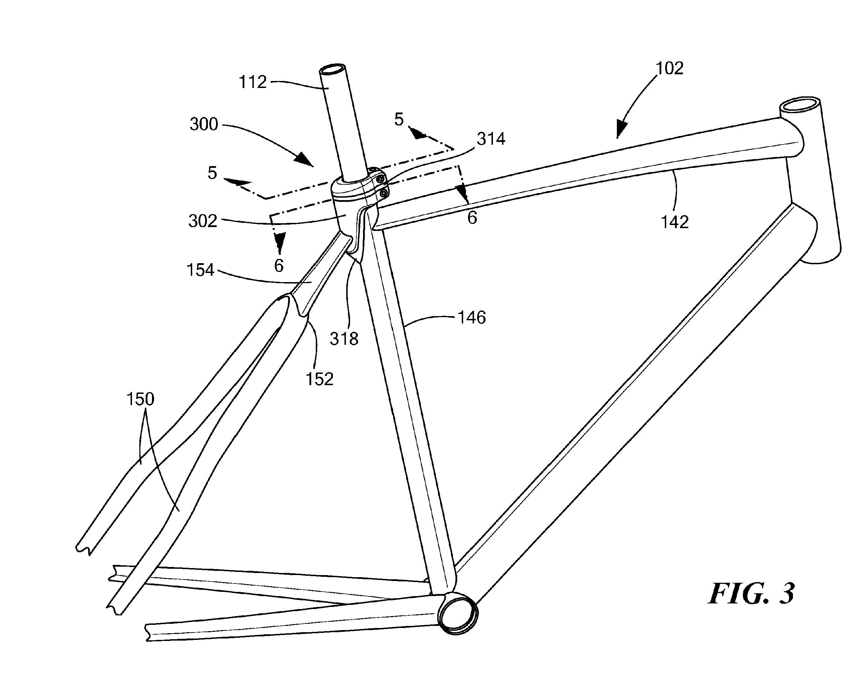

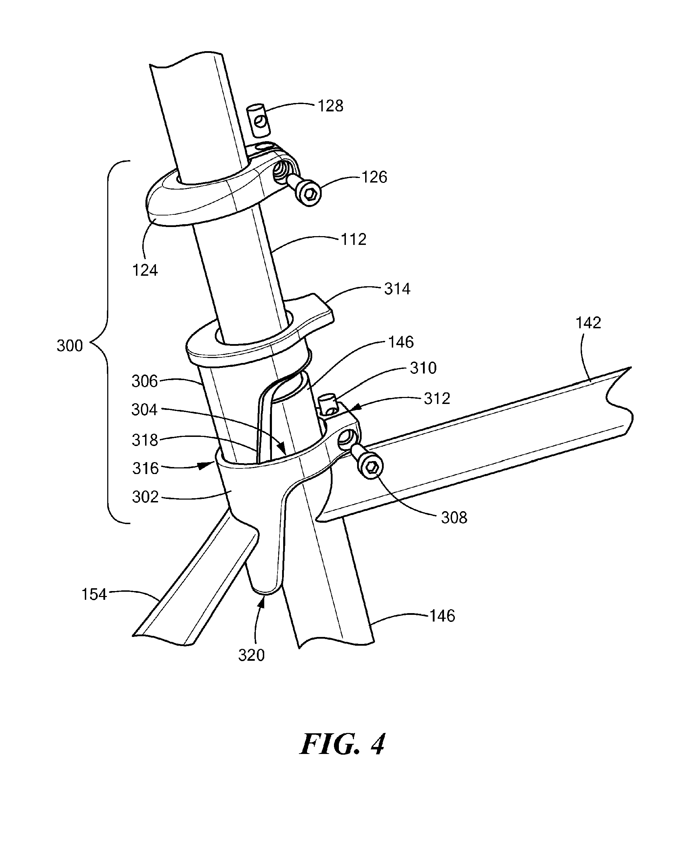

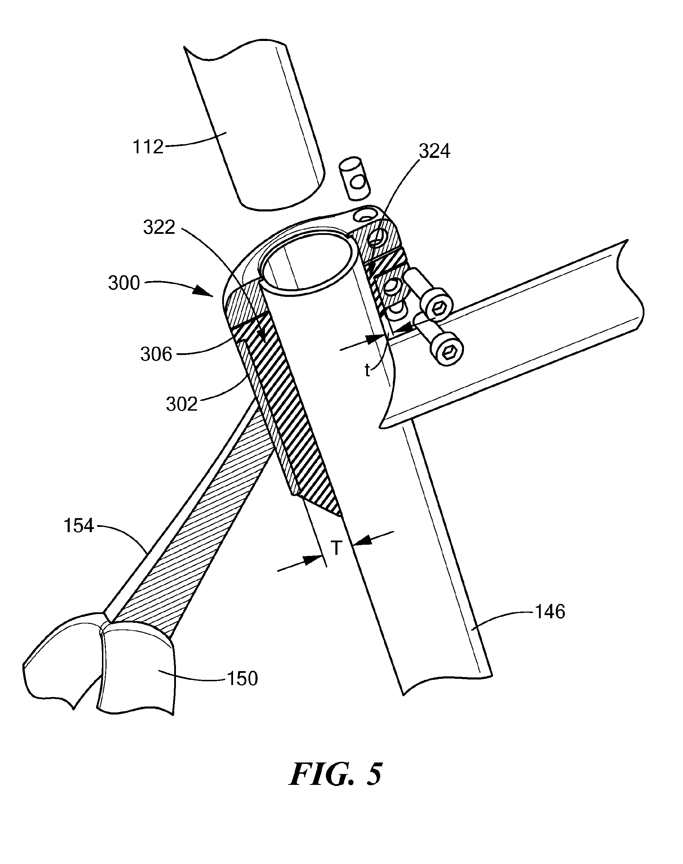

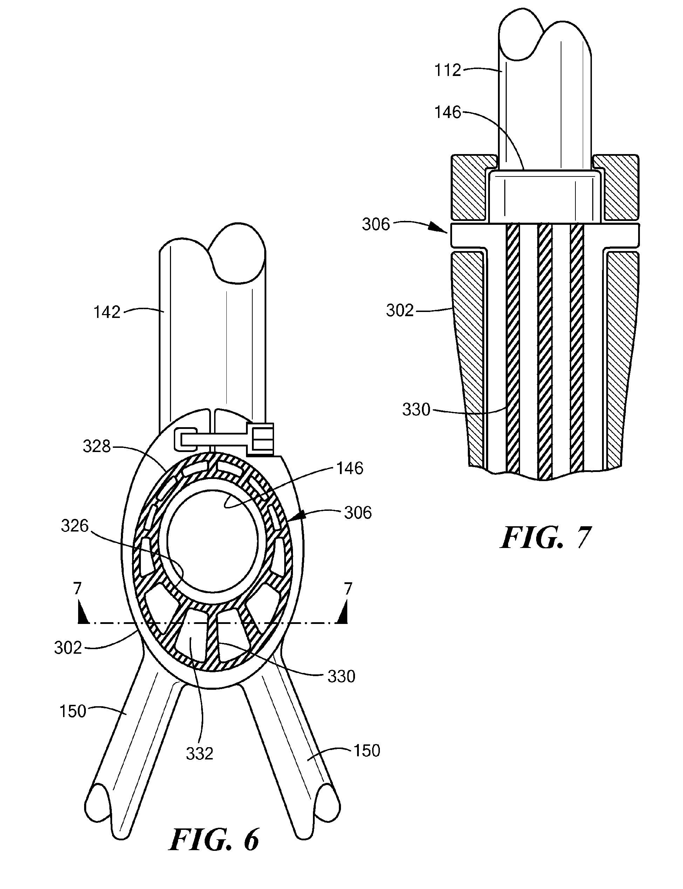

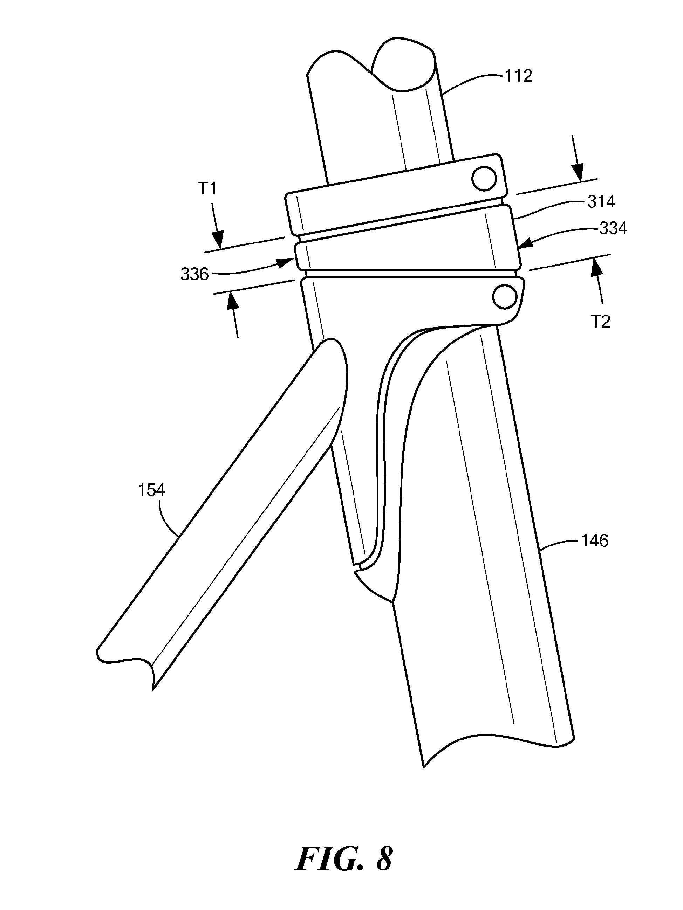

Reference is now made to Figures 3-8 in combination with Figure 1, where Figure 3 depicts the bicycle frame 102 with the vibration damping coupling 300 clamped thereto at the effective seat tube 146, Figure 4 depicts an exploded assembly view of the vibration damping coupling 300, Figure 5 depicts a cross-section view through cut-line 5-5 of an embodiment of the vibration damping coupling 300 depicted in Figure 3, but with the seat post 112 disassembled from the seat tube 146, Figure 6 depicts a cross-section view through cut-line 6-6 of another embodiment of the vibration damping coupling 300 depicted in Figure 3, Figure 7 depicts a cross-section view through cut-line 7-7 depicted in Figure 6, and Figure 8 depicts another embodiment of the vibration damping coupling 300 depicted in Figure 3.

As depicted in Figures 3 and 4, the seat stays 150 (also herein referred to as a first member) have a clamp 302 (also herein referred to generally as a sheath) fixedly disposed at one end, where the clamp 302 at least partially surrounds an upper portion of the effective seat tube 146 (also herein referred to as a second member) with a gap 304 therebetween. That is, the clamp 302 does not directly contact the effective seat tube 146. In an embodiment, the clamp 302 is welded or otherwise integrally formed with the end of the seat stays 150. An elastically deformable coupling 306 is disposed in compression between the clamp 302 and the effective seat tube (second member) 146 via a bolt 308 and barrel nut 310, where the elastically deformable coupling 306 is disposed to at least partially fill the gap 304. The clamp 302 includes a pair of solid-stop surfaces 312 that precisely control a degree of the compression of the elastically deformable coupling 306 when the bolt 308 and barrel nut 310 are securely fastened to each other. While embodiments of the invention describe and illustrate a bolt 308 and barrel nut 310 for securely fastening clamp members together, it will be appreciated that the scope of the invention is not so limited and also encompasses other fastening means, such as a bolt that threads into a tapped portion of the clamp body, for example. In an embodiment, the seat post clamp 124 is disposed and clamped directly adjacent the elastically deformable coupling 306, which prevents the elastically deformable coupling 306 from inadvertently being axially dislodged with respect to the effective seat tube 146 and clamp 302.

As depicted in Figure 3, an embodiment includes an arrangement where the seat stays 150 are joined at a bight 152, with a yoke 154 that extends between and joins the bight 152 and the clamp 302. However, it will be appreciated that another embodiment includes an arrangement where the seat stays 150 extend all the way to and connect directly with the clamp 302 absent such a bight 152. Both arrangements are contemplated herein and considered within the scope of the invention. And when reference is made herein to a first member, such reference may be to either the seat stays 150 or the yoke 154.

In an embodiment, the elastically deformable coupling 306 has a first flange 314 that extends beyond a first end 316 of the clamp 302, and a second flange 318 that extends beyond a second end 320 of the clamp 302. The first and second flanges 314, 318 provide a means for securely positioning the elastically deformable coupling 306 within the clamp 302 once clamped to the effective seat tube 146 via the bolt 308 and barrel nut 310.

With reference now to Figure 5, an embodiment of the elastically deformable coupling 306 has a proximal side 322 proximate the seat stays 150, or yoke 154, (both of which may herein be referred to as the first member), and a distal side 324 distal to the first member 150, 154. In the embodiment of Figure 5, the proximal side 322 of the elastically deformable coupling 306 has a thicker cross-section than the distal side 324, as indicated by thicknesses "T" and "t", where T≥t. In an embodiment, T>t. By purposefully sizing the thicknesses of the proximal and distal sides 322, 324 of the elastically deformable coupling 306 to be different, vibrations originating from the rear wheel 110 that attempt to reach the rider's seat 114 via the seat stays 150 can be effectively dampened with optimal material usage for the elastically deformable coupling 306, since the proximal side 322 would primarily experience a compressive vibration load, while the distal side 324 would primarily experience a decompressive vibration load.

With reference now to Figure 6, the seat stays 150 are depicted extending all the way to and connecting directly with the clamp 302 absent a bight 152, as previously discussed and in accordance with an embodiment of the invention. In the embodiment of Figure 6, the elastically deformable coupling 306 further includes an inner portion 326 proximate the effective seat tube (second member) 146, an outer portion 328 proximate the clamp 302, and a plurality of integrally formed ribs 330 that extend between the inner and outer portions 326, 328, resulting in a plurality of voids 332 within the body of the elastically deformable coupling 306, which serves to modify the effective durometer value of the elastically deformable coupling 306. Figure 7 depicts a cross-section view through cut-line 7-7 depicted in Figure 6, which better illustrates the elongated ribs 330 of the elastically deformable coupling 306.

As will be appreciated from the foregoing, by providing a clamp 302 that can be tightened and loosened via bolt 308 and barrel nut 310, a rider is provided with a means of changing out a first elastically deformable coupling 306 (embodiment of Figure 5 for example) with a second elastically deformable coupling 306 (embodiment of Figures 6-7 for example), thereby affording the rider with the opportunity to create a "stiff" ride or a "soft" ride, relatively speaking, depending on the terrain and/or conditions at hand.

With reference now to Figure 8, an embodiment includes an arrangement where the first flange 314 of the elastically deformable coupling 306 has a non-uniform thickness that is thicker at a front side 334 than at a rear side 336, as indicated by thicknesses "T1" and "T2", where T2≥T1. In an embodiment, T2>T1. By varying the thickness of the first flange 314 in the manner illustrated, further damping optimization is contemplated.

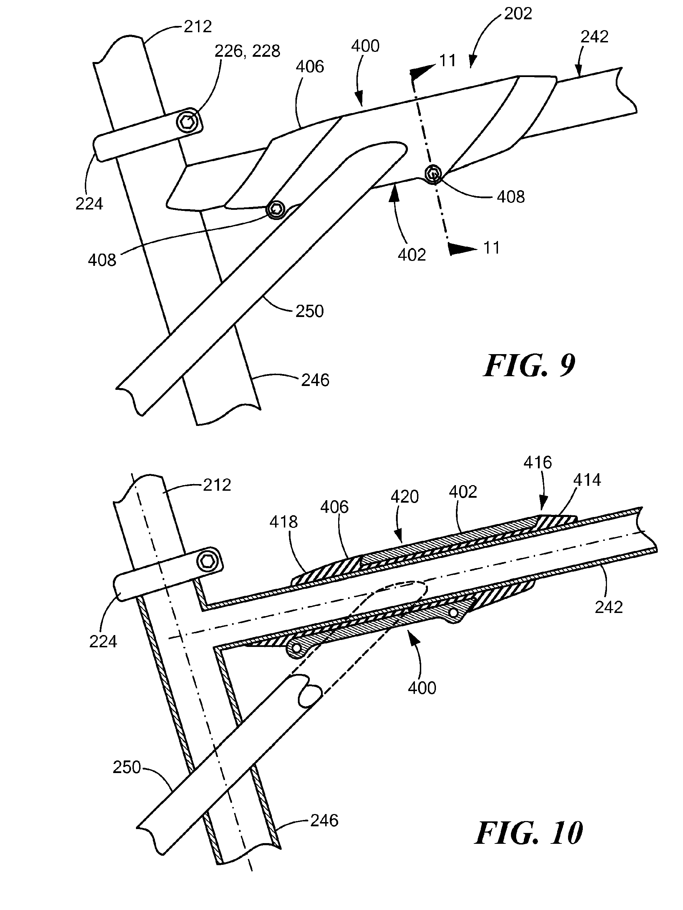

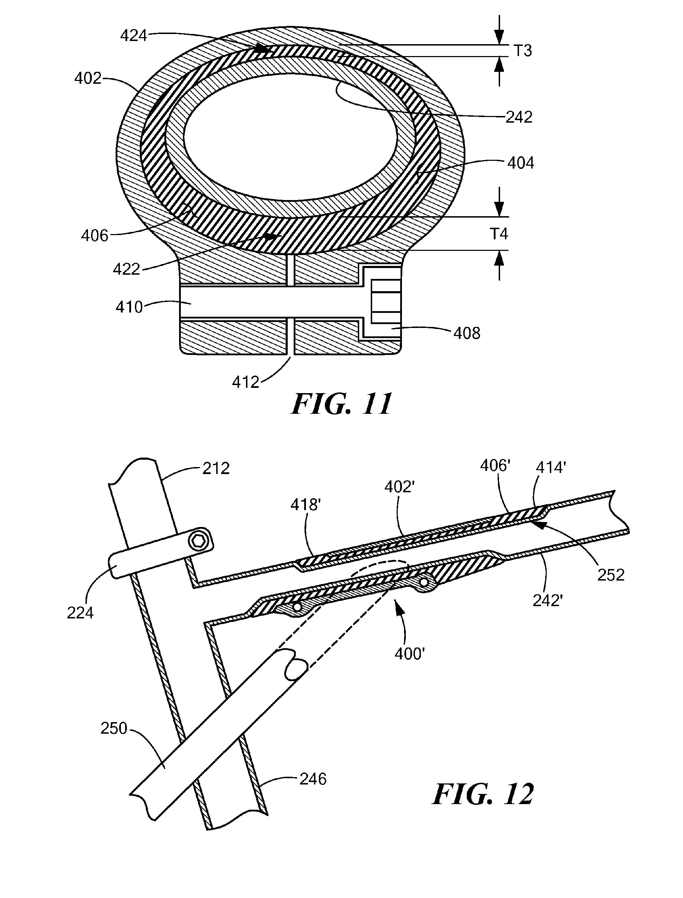

Reference is now made to Figures 9-12 in combination with Figure 2, where Figure 9 depicts a portion of the bicycle frame 202 with the vibration damping coupling 400 clamped thereto at the effective top tube 242, Figure 10 depicts a cross-section side view cut along the center of the effective top tube 242 and the vibration damping coupling 400, Figure 11 depicts a cross-section view through cut-line 11-11 depicted in Figure 9, and Figure 12 depicts a cross-section side view alternative to that depicted in Figure 10.

As depicted in Figures 9 and 10, the plurality of frame members of frame 202 includes seat stays 250 (also herein referred to as a first member), an effective top tube 242 (also herein referred to as a second member), and an effective seat tube 246 (also herein referred to as a third member). An upper portion of the effective seat tube 246 is rigidly connected with a rearward end of the effective top tube 242. As previously discussed in connection with the embodiment of Figures 3 and 4, the embodiment of Figures 9 and 10 also has a clamp 402 (also herein referred to generally as a sheath) fixedly disposed at one end of the seat stays 250, where the clamp 402 at least partially surrounds the effective top tube 242, as opposed to the effective seat tube 246, with a gap 404 therebetween (best seen with reference to Figure 11 where the gap is occupied by an elastically deformable coupling 406, which will be discussed in more detail below). That is, the clamp 402 does not directly contact the effective top tube 242. In an embodiment, the clamp 402 is welded or otherwise integrally formed with the end of the seat stays 250. As depicted, the vibration damping coupling 400 is disposed proximate the rearward end of the effective top tube 242. As used herein, the term rearward means more toward the rear wheel 110, 210 than the front wheel 104, 204, and the term forward means more toward the front wheel 104, 204 than the rear wheel 110, 210.

While Figures 9 and 10 depict only one seat stay 250 illustrated being on the viewer's side of the effective seat tube 246 as viewed from the perspective of Figures 9 and 10, it will be appreciated that an embodiment includes an arrangement where a second seat stay 250, in addition to the one illustrated seat stay 250, is arranged on the other side of the effective seat tube 246 out of view. In the illustrated embodiment, each seat stay 250 extends from a region rearward of the effective seat tube 246, from the rear wheel 210, to a region forward of the effective seat tube 246 with a gap between each seat stay 250 and the effective seat tube 246. That is, the two seat stays 250 are not attached to the effective seat tube 246 in the embodiment of Figures 9 and 10.

An elastically deformable coupling 406 is disposed in compression between the clamp 402 and the effective top tube 242 via bolts 408 and barrel nuts 410, where the elastically deformable coupling 406 is disposed to at least partially fill the gap 404. The clamp 402 includes a pair of solid-stop surfaces 412 that precisely control a degree of the compression of the elastically deformable coupling 406 when the bolts 408 and barrel nuts 410 are securely fastened to each other.

As depicted in Figures 9 and 10, an embodiment includes an arrangement where the seat stays 250 extend forward of and on each side of the effective seat tube 246 where they are joined to the clamp 402. However, it will be appreciated that another embodiment includes an arrangement where the seat stays 250 are joined at a bight (similar to the bight 152 depicted in Figure 3) forward of the effective seat tube 246, with a yoke (similar to the yoke 154 depicted in Figure 3) that extends between and joins the bight and the clamp 402. Both arrangements are contemplated herein and considered within the scope of the invention. And when reference is made herein to a first member, such reference may be to either the seat stays 250 or the aforementioned yoke.

In an embodiment, the elastically deformable coupling 406 has a first flange 414 that extends beyond a first end 416 of the clamp 402, and a second flange 418 that extends beyond a second end 420 of the clamp 402. The first and second flanges 414, 418 provide a means for securely positioning the elastically deformable coupling 406 within the clamp 402 once clamped to the effective top tube 242 via the bolts 408 and barrel nuts 410.

With reference now to Figure 11, an embodiment of the elastically deformable coupling 406 has a proximal side 422 proximate the seat stays (first member) 250, and a distal side 424 distal to the seat stays 250. In the embodiment of Figure 11, the proximal side 422 of the elastically deformable coupling 406 has a thicker cross-section than the distal side 424, as indicated by thicknesses "T4" and "T3", where T4≥T3. In an embodiment, T4>T3. Similar to the elastically deformable coupling 306, by purposefully sizing the thicknesses of the proximal and distal sides 422, 424 of the elastically deformable coupling 406, vibrations originating from the rear wheel 210 that attempt to reach the rider's seat 214 via the seat stays 250 can be effectively dampened with optimal material usage for the elastically deformable coupling 406, since the proximal side 422 would primarily experience a compressive vibration load, while the distal side 424 would primarily experience a decompressive vibration load.

While not specifically illustrated in connection with the embodiments of Figures 9 and 10, it will be appreciated from the disclosure herein relating to the embodiments depicted in Figures 6 and 7 that an alternative embodiment of the elastically deformable coupling 406 may further include an inner portion (similar to the inner portion 326 depicted in Figure 6) proximate the effective top tube 242, an outer portion (similar to the outer portion 328 depicted in Figure 6) proximate the clamp 402, and a plurality of integrally formed ribs (similar to the ribs 330 depicted in Figures 6 and 7) that extend between the inner and outer portions, resulting in a plurality of voids (similar to the voids 332 depicted in Figure 6) within the body of the elastically deformable coupling 406, which serves to modify the effective durometer value of the elastically deformable coupling 406.

Reference is now made to Figure 12, which depicts an alternative embodiment to the effective top tube 242 and vibration damping coupling 400 depicted in Figure 10, where like elements are numbered alike, and similar elements are numbered with primes. In Figure 12, the seat stays 250 extend forward of and on each side of the effective seat tube 246 where they are joined to a clamp 402' in a manner similar to that depicted in Figures 9 and 10. However, in Figure 12 the effective top tube 242' has a necked down region 252 that provides a recess for the elastically deformable coupling 406' and the clamp 402' of the vibration damping coupling 400' to nest within, thereby providing a more streamlined profile. As previously described, the clamp 402' does not directly contact the effective top tube 242', as the elastically deformable coupling 406' is disposed therebetween. Other features described above in connection with Figures 9 and 10, and numbered alike in Figure 12, such as the first and second flanges 414', 418' for example, are equally applicable to the embodiment depicted in Figure 12, and are considered to be within the scope of the invention disclosed herein.

As discussed previously, by providing a clamp 402, 402' that can be tightened and loosened via bolts 408 and barrel nuts 410, a rider is provided with a means of changing out a first elastically deformable coupling 406, 406' (without ribs and voids, for example) with a second elastically deformable coupling 406 406' (with ribs and voids, for example), thereby affording the rider with the opportunity to create a "stiff" ride or a "soft" ride, relatively speaking, depending on the terrain and/or conditions at hand. In the embodiment of Figures 2 and 9-12, it is contemplated that the elastically deformable coupling 406, 406' would need to be split along its length, or provided as two clamshell halves, in order for it to be removable and replaceable.

From the foregoing, it will be appreciated that each elastically deformable coupling 306, 406, 406' of each respective vibration damping coupling 300, 400, 400' provides a degree of vibration damping in six orthogonal directions, relative to an x-y-z orthogonal Cartesian coordinate system, as each elastically deformable coupling 306, 406, 406' surrounds its respective second member (effective seat tube 146, effective top tube 242, and effective top tube 242', respectively), and each respective first member (seat stays 150, seat stays 250, and seat stays 250, respectively) is not rigidly joined to its respective second member (effective seat tube 146, effective top tube 242, and effective top tube 242', respectively).

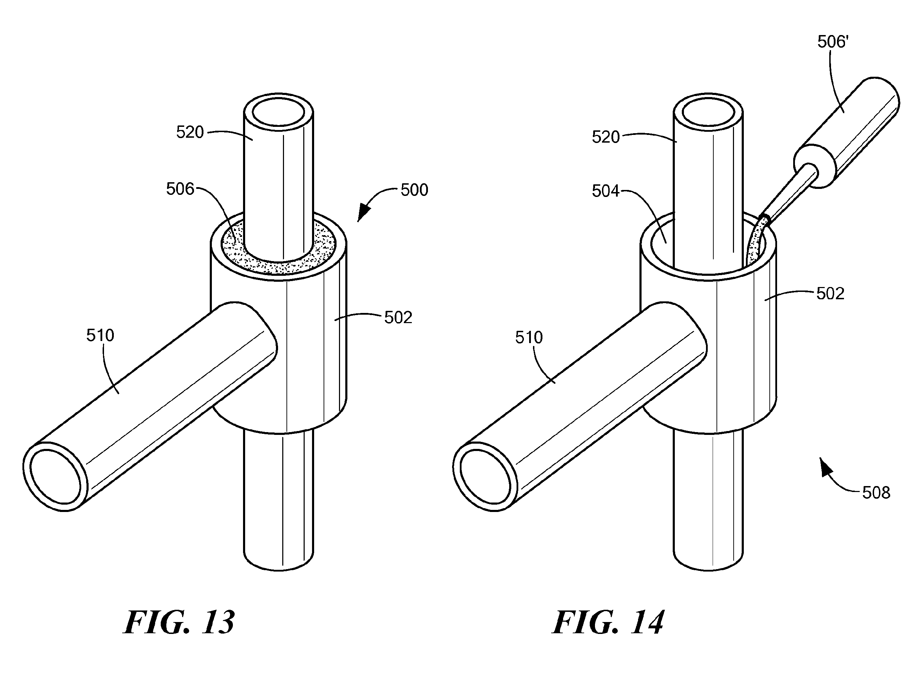

Reference is now made to Figures 13 and 14, where Figure 13 depicts an alternate vibration damping coupling 500 that is alternative to the aforementioned vibration damping couplings 300, 400, 400', and Figure 14 depicts a manufacturing method for producing the vibration damping coupling 500.

In place of the clamp 302, 402, 402' that is employed with the vibration damping coupling 300, 400, 400', respectively, vibration damping coupling 500 employs an outer sheath 502 that is fixedly disposed at one end of a first member 510, which may be any one of the aforementioned first members, such as the seat stay 150, 250 and seat stay yoke 154, for example. The outer sheath 502 at least partially surrounds a second member 520, which may be any one of the aforementioned second members, such as the effective seat tube 146 or the effective top tube 242, for example. Between the outer sheath 502 and the second member 520 is a gap 504 (best seen with reference to Figure 14) such that the outer sheath 502 does not directly touch the second member 520. That is, there is no direct contact between the outer sheath 502 and the second member 520. An elastically deformable coupling 506 is disposed between the outer sheath 502 and the second member 520 to at least partially fill the gap 504. The elastically deformable coupling 506 performs in a manner previously described herein in connection with elastically deformable couplings 306, 406, 406'. In an embodiment, the elastically deformable coupling 506 is a fully cured compressive elastomer that is press-fit into the gap 504. In another embodiment, the elastically deformable coupling 506 is a curable elastomer that is injected into or otherwise disposed within the gap 504, and allowed to fully cure in situ.

In an embodiment, and with reference now to Figure 14 in combination with Figure 13, a manufacturing method for producing the vibration damping coupling 500 includes: providing a first member 510 having an outer sheath 502 fixedly disposed at one end; providing a second member 520; arranging the second member 520 relative to the outer sheath 502 such that the outer sheath 502 envelopes the second member 520 with a gap 504 therebetween; and, at least partially filling the gap 504 with an elastically deformable coupling 506. In an embodiment, at least partially filling the gap 504 with the elastically deformable coupling 506 includes: providing a fully cured compressive elastomer 506; and press-fitting the elastomer 506 into the gap 504. In another embodiment, at least partially filling the gap 504 with the elastically deformable coupling 506 includes: providing a curable elastomer 506'; injecting or otherwise disposing the curable elastomer 506' in the gap 504; and, curing or allowing to cure the curable elastomer 506' in situ. In an embodiment, a bottom opening 508 between the outer sheath 502 and the second member 520 may be temporarily closed off to permit the curable elastomer 506' to cure in situ. While certain combinations of features relating to a bicycle have been described herein, it will be appreciated that these certain combinations are for illustration purposes only and that any combination of any of these features may be employed, explicitly or equivalently, either individually or in combination with any other of the features disclosed herein, in any combination, and all in accordance with an embodiment of the invention. Any and all such combinations are contemplated herein and are considered within the scope of the invention disclosed.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best or only mode contemplated for carrying out this invention, but that the invention will include all embodiments falling within the scope of the appended claims. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

## Claims

1. A bicycle frame, comprising:
a plurality of frame members comprising a first member and a second member, the first member comprising an outer sheath disposed at one end, wherein the outer sheath at least partially surrounds the second member with a gap therebetween such that the outer sheath does not directly touch the second member; and
an elastically deformable coupling disposed in compression between the outer sheath and the second member, the elastically deformable coupling being disposed to at least partially fill the gap.

2. The bicycle frame of Claim 1, wherein:
the outer sheath comprises a clamp that is movable from a first unclamped position to a second clamped position, wherein the second clamped position retains the elastically deformable coupling in compression between the clamp and the second member.

3. The bicycle frame of Claim 1, wherein:
the first member comprises a seat stay or a seat stay yoke; and
the second member comprises an effective seat tube.

4. The bicycle frame of Claim 1, wherein:
the first member comprises a seat stay or a seat stay yoke; and
the second member comprises an effective top tube.

5. The bicycle frame of Claim 2, wherein:
the elastically deformable coupling has a proximal side proximate the first member, and a distal side distal to the first member, the proximal side having a thicker cross-section than the distal side.

6. The bicycle frame of Claim 2, wherein:
the elastically deformable coupling comprises an inner portion proximate the second member, an outer portion proximate the clamp, and a plurality of integrally formed ribs that extend between the inner and outer portions.

7. The bicycle frame of Claim 2, wherein:
the clamp comprises a pair of solid-stop surfaces that precisely control a degree of the compression of the elastically deformable coupling.

8. The bicycle frame of Claim 2, wherein:
the elastically deformable coupling comprises a first flange that extends beyond a first end of the clamp.

9. The bicycle frame of Claim 8, wherein:
the elastically deformable coupling comprises a second flange that extends beyond a second end of the clamp.

10. The bicycle frame of Claim 2, wherein:
the clamp comprises a bolt and a barrel nut.

11. The bicycle frame of Claim 2, wherein the first member comprises a seat stay or a seat stay yoke, the second member comprises an effective seat tube, the clamp is disposed proximate an upper portion of the effective seat tube, and further comprising:
a seat post clamp disposed surrounding and in a compressive relationship with an upper end of the effective seat tube, the seat post clamp being disposed directly adjacent the elastically deformable coupling.

12. The bicycle frame of Claim 2, wherein:
the first member comprises a seat stay or a seat stay yoke;
the second member comprises an effective top tube;
the plurality of frame members comprises a third member in the form of an effective seat tube, an upper portion of the effective seat tube being rigidly connected with a rearward end of the effective top tube, the clamp being disposed proximate the rearward end of the effective top tube; and
the first member comprises a first seat stay and a second seat stay, each seat stay extending from a region rearward of the effective seat tube to a region forward of the effective seat tube with a gap between each seat stay and the effective seat tube.

13. A bicycle, comprising:
a bicycle frame;
a front wheel, a front fork, handlebars, a rear wheel, a seat post and seat, a crank, and a drive chain, all operably coupled to the bicycle frame;
wherein the bicycle frame comprises:
a plurality of frame members comprising a first member and a second member, the first member comprising an outer sheath disposed at one end, wherein the outer sheath at least partially surrounds the second member with a gap therebetween such that the outer sheath does not directly touch the second member; and
an elastically deformable coupling disposed in compression between the outer sheath and the second member, the elastically deformable coupling being disposed to at least partially fill the gap.

14. The bicycle of Claim 13, wherein:
the outer sheath comprises a clamp that is movable from a first unclamped position to a second clamped position, wherein the second clamped position retains the elastically deformable coupling in compression between the clamp and the second member.
